# EUROPÄISCHE PATENTSCHRIFT

(11) **EP 1 716 954 B1**
(45) Veröffentlichungstag und Bekanntmachung des Hinweises auf die Patenterteilung: **17.10.2007**
(21) Anmeldenummer: 06112899.7
(22) Anmeldetag: 21.04.2006
(51) Int. Cl.: B23D 21/08, B23D 21/04

(54) **Rohrschneider**
Pipe cutter
Dispositif de coupe de tubes

(30) Priorität: 28.04.2005 CH 7492005
(43) Veröffentlichungstag der Anmeldung: 02.11.2006
(73) Patentinhaber: Novartec AG, 9496 Balzers (LI)
(72) Erfinder: Goop, Hans-Jörg, 9488 Schellenberg (LI)
(74) Vertreter: Kaminski, Susanne

(56) Entgegenhaltungen:
- WO-A-93/13901
- GB-A- 1 464 606
- SU-A1- 1 764 863
- US-A- 4 939 964
- US-A- 4 953 292
- US-A- 6 095 021

## Beschreibung

Die Erfindung betrifft einen Rohrschneider und insbesondere einen handgehaltenen Rohrschneider.

Das Trennen von Rohren - auch als "Ablängen" bezeichnet, ist oftmals der erste Schritt bei Installationsarbeiten. Dabei ist für nachfolgende Arbeitsschritte die Qualität der Trennung, d.h. insbesondere die Qualität der Schneidkante, von grosser Bedeutung, insbesondere auch für eine nachfolgende Verbindung von abgelängten Rohrenden. Wichtiges Kriterium für ein sauberes Trennen - z.B. Schneiden, Sägen oder Stanzen - von Rohren ist ein rechtwinkliger Schnitt, das Rohr muss also rechtwinklig zum Trennwerkzeug, wie einem Schneidrad, liegen. Weiters spielen die stabile Lage des Rohres im Werkzeug, sowie die Qualität der Werkzeug-Komponenten, wie des Schneidrads, sowie selbstverständlich der Trennvorgang selbst eine Rolle bezüglich der Trennqualität.

Zum Schneiden von Rohren werden seit vielen Jahren Rohrschneider entwickelt. Insbesondere für den Baustelleneinsatz sind dabei handhaltbare Werkzeuge erwünscht. Kriterien für diese Werkzeuge sind das Gewicht, die Handlichkeit und Kompaktheit, die Kosten und natürlich die Schneidequalität. Ausserdem werden Werkzeuge gewünscht, welche flexibel einsetzbar sind und insbesondere beim Schneiden nicht allzu viel Platz beanspruchen, da auch oftmals schon verlegte Rohre mit wenig Freiraum um das Rohr herum geschnitten werden müssen. Ein sauberer Schnitt beim Trennen von Rohren ist ein unabdingbares Erfordernis, andernfalls sind Schäden beim nachfolgenden Einsetzen und Bearbeiten der Rohre die Folge. So ergeben sich in Folge unsauberer Schnittkanten beispielsweise beim verpressenden Verbinden von Rohren in den Fittingen verkantete Rohrenden, sowie beschädigte Dichtringe oder verformte Pressfittings und damit undichte Systeme.
Problematisch bei bekannten Rohrschneidern ist im Allgemeinen das Verhältnis Trennflächengüte zu Längentoleranz zu Kosten. Kostengünstige, leicht handhabbare Werkzeuge liefern oft nicht die nötige Schnittqualität, so entstehen beispielsweise bei einer leichten Schräghaltung des Rohres schräge Schnittkanten, ausserdem tritt beim Schnitt meist ein starker Einzug des Rohres zur Innenseite und eine Verformung des Rohres auf. Weiter nachteilig ist die Entstehung von Aussen- und/oder Innengraten, die nach dem Trennen entfernt werden müssen, wozu handelsübliche Werkzeuge oft einen integrierten Entgrater aufweisen. Vernachlässigte Grate können Verwirbelungen im Rohrinneren verursachen, die zu Druckverlusten und Korrosionsschäden führen und ausserdem eine Verletzungsgefahr für den Handwerker darstellen.
Ist das Schneidewerkzeug so ausgebildet, dass das Rohr zum Schneiden gedreht werden muss, kann bei unwuchtiger Lagerung die Sicherheit des Handwerkers durch ein Ausschlagen des Rohres bei der Bearbeitung gefährdet sein.

US-4,939,964 wird als nächstliegender Stand der Technik angesehen und offenbart einem Rohrschneider zum Schneiden eines Rohres mit: einem Kopfteil mit wenigstens einer ersten und zweiten Backe (2,2'),
wobei
- die Backen (2,2') in Umfangrichtung aneinander anschliessen und in geschlossenem Zustand eine im Wesentlichen kreisförmige Rohrhalterung bilden,
- die Backen (2,2') derart verbunden sind, dass eine Schwenkbewegung der Backen relativ zueinander ausführbar ist,
- zur Auf- und Entnahme des Rohres der geschlossene Zustand durch Ausschwenken wenigstens einer Backe (2,2') geöffnet werden kann,
- der geschlossene Zustand durch Einschwenken der wenigstens einen Backe (2,2') wiederhergestellt werden kann,
- das Kopfteil wenigstens einen Schneidradkopf (8), in welchem ein federgelagertes Schneidrad (7) beweglich gelagert ist, aufweist,
und mit
o einer Antriebseinrichtung, mittels welcher das Kopfteil in eine Drehbewegung versetzt werden kann.

Es ist die Aufgabe der vorliegenden Erfindung, einen Rohrschneider mit verbesserter Schnittqualität bereitzustellen.

Diese Aufgabe wird erfindungsgemäss durch die Verwirklichung der Merkmale der Ansprüche 1 und 16 gelöst bzw. werden die Lösungen durch die Merkmale der abhängigen Ansprüche weitergebildet.

Die Erfindung betrifft einen Rohrschneider zum Trennen von Rohren, insbesondere von Edelstahl- und Kupferrohren. Erfindungsgemäss ist der Rohrschneider so ausgebildet, dass er ein drehbares Innenkopfteil mit wenigstens einem federgelagerten Schneidradkopf, in welchem Schneidradkopf ein Schneidrad drehbar gelagert ist, aufweist - durch die Drehbarkeit des Innenkopfteils muss der Rohrschneider zum Schneiden eines Rohres nicht um das Rohr herumgeführt werden. Diese Ausbildung ist z.B. mit einem Innenkopfteil, welches in einem äusseren Kopfteil gelagert/geführt ist, ausführbar. Insbesondere setzt sich das Innenkopfteil aus wenigstens zwei inneren Backen zusammen, ebenfalls ist das Aussenkopfteil/Gehäusekopfteil vorteilhaft aus wenigstens zwei Backen gebildet. Die Gehäusebacken des Aussenkopfteils sind so ausgebildet, dass sie den Innenkopf aufnehmen können, z.B. mit einer ausschwenkbaren Gehäusebacke. Die Innenbacken sind in Umfangrichtung aneinander anschliessend angeordnet und schwenkbar miteinander verbunden, wobei zwei Backen nicht verbunden sind, sondern an einer Schliessstelle verbindbar bzw. verschliessbar sind. Durch Öffnen der Schliessstelle und Ausschwenken wenigstens einer Backe kann ein Rohr in die von den Backen gebildete Rohraufnahme/Rohrhalterung aufgenommen werden. Im Allgemeinen wird das Werkzeug bzw. der Werkzeugkopf geöffnet, um ein zu bearbeitendes Rohr gelegt und geschlossen.

Der Werkzeug-Innenkopf weist erfindungsgemäss wenigstens einen federgelagerten Schneidradkopf mit Schneidrad auf, wobei der Schneidradkopf im Innenkopfteil federgelagert und das Schneidrad im Schneidradkopf um die Schneidradachse drehbar gelagert ist. Durch die Federlagerung ist es möglich, eine definierte Zustellkraft auf das Rohr auszuüben. So ist über die Federn eine definierte Vorspannkraft einstellbar, welche mit zunehmender Schnitttiefe abnimmt und so einen schönen Schnitt ohne Hineinziehen des Rohres und ohne Gratbildung ermöglicht. Ausserdem ist das Rohr in der - durch die Innenbacken gebildeten - Rohrhalterung derart abgestützt - entweder durch mehrere entsprechend angeordnete federkraftbeaufschlagte Schneidräder oder durch Schneidrad/-räder und Stützrolle/-rollen -, dass eine rechtwinkelige Ausrichtung des Rohres zum Schneidrad erreicht und gewährleistet wird. Insbesondere kann das Rohr in den Werkzeugkopf eingespannt und dort so umspannt werden, dass es im Kopf von selbst rechtwinklig ausgerichtet wird. Das Trennen rechtwinklig zur Rohrachse ist entscheidend für die Qualität des Schnitts. Mit der erfindungsgemässen Ausbildung des Rohrschneidegeräts ist ein Trennen mit sauberem Schnitt, geradem Schnittverlauf und gratfreien Kanten erreichbar. Damit ist eine - zeitaufwändige - Nachbearbeitung der Schneidkanten überflüssig. Auch wird durch die definierte Kraftzustellung beim Trennen ein Einzug des Rohres zur Rohrinnenseite verhindert.

Vorteilhaft sind im Innenkopfteil entweder mehrere federkraftbeaufschlagte Schneidräder zum gleichmässigen Abstützen und rechtwinkligen Ausrichten des Rohres vorgesehen, oder aber ein oder mehrere Schneidräder und ein oder mehrere federkraftbeaufschlagte Stützrollen zur Lagerung. Die Stützrollen sind dann auch in entsprechenden federgelagerten Aufnahmen gelagert. Die Anordnung von Stützrolle/n und Schneidrad/rädern ist dann wiederum derart, dass ein rechtwinkliger Schnitt des Rohres erreicht wird. Bei einer gleichmässigen Verteilung der Federkraft durch die Schneidräder oder das/die Schneidrad/räder und die Stützrolle/n um den Umfang des Innenkopfteils ist eine besonders gute - rechtwinklige - Abstützung des eingespannten Rohres erreichbar, insbesondere richtet sich das eingespannte Rohr selbsttätig rechtwinklig aus. Die rechtwinklige Ausrichtung des Rohrs und die Stabilität der Halterung desselben (im rechtwinkligen Zustand) kann durch jeweils paarweise parallel (links/rechts) angeordnete Stützrollen weiter verbessert werden. Eine andere Möglichkeit ist, die Rollen in ihrer Breite "auszudehnen" - durch möglichst breite Rollen/Lager ist ebenfalls eine stabile Stützung erreichbar.
Zudem sind Stützrolle/n und Schneidrad/räder vorzugsweise beschichtet. Durch die Beschichtung der Stützrollen/Lager kann einerseits die Lebensdauer der Rollen erhöht werden, andererseits ist eine reibungsvermindernde Beschichtung (Antihaft-, Gleitbeschichtung) wählbar, wodurch eine Reduktion der beim Schneiden benötigten Kraft bewirkt werden kann. Nachdem viele Werkzeuge bei grossen Rohrdurchmessern kraftmässig ziemlich am Limit arbeiten, ist ein verminderter Kraftaufwand zum Schneiden des Rohres ein grosser Vorteil.

Der erfindungsgemäss drehbare Innenkopf des Schneidwerkzeugs ist automatisch antreibbar, z.B. über ein (motorbetriebenes) Zahnrad- oder Schneckenradgetriebe. So weisen beispielsweise die im Aussenkopfteil geführten Innenbacken ein Antriebsrad, wie Zahnrad/Schneckenrad/Reibrad auf, welches über ein Getriebe - Zahn/Schnecken/Reibradgetriebe - im an den Werkzeugkopf anschliessenden Werkzeugkörper angetrieben werden kann. Dabei ist das Antriebsrad dem Innenkopfteil als erste Antriebseinheit und der Antrieb dem Werkzeugkörper als zweite Antriebseinheit zugeordnet. Erste und zweite Antriebseinheit stellen eine Antriebseinrichtung zum Versetzen des Innenkopfteils in eine Drehbewegung dar. Werkzeugkopf - im Allgemeinen aus Aussen- und Innenbacken zusammengesetzt - und Werkzeugkörper sind über eine Aufnahme koppelbar. Der Werkzeugkörper ist insbesondere in bekannter Art und Weise mit Antriebsvorrichtung, Handgriff, Hebel, Betätigungsknopf, etc. ausgebildet. Ebenso ist es möglich, den Werkzeugkopf auf handelsübliche Gerätekörper/Gehäuse "aufzusetzen".

Zur Aufnahme eines zu bearbeitenden Rohres ist - wie bereits erwähnt - das Werkzeug-Kopfteil öffenbar, z.B. durch Ausschwenken einer Aussen- und Innenbacke. Dabei ist zur Aufnahme des Rohres ein gemeinsames Öffnen von Aussen- und Innenbacken erforderlich. Bei einer Korrelationsposition von Aussen- und Innenbacken liegen die Schliessstellen der Backen übereinander und können dann geöffnet werden. Diese Korrelationsposition ist mechanisch (z.B. über Markierungsfenster) feststellbar, und/oder es ist zur Erkennung der Korrelationsposition ein (oder mehrere) Sensor(en) vorgesehen. Werden die Backen an ihrer jeweiligen Schliessstelle mit einem Magneten versehen, kann die Schliessstellen-Position durch einen Hall Sensor detektiert werden. Ausserdem kann der Sensor über eine Einrichtung am Rohrschneider z.B. akustisch oder optisch signalisieren, wenn - z.B. (bei einem einzigen Schneidrad) nach einem Umlauf des Schneidrads - die Schliessstellen (an der Korrelationsposition) übereinander liegen.

Erfindungsgemässe Rohrschneider können für unterschiedliche Rohrgrössen und Rohrmaterialien ausgebildet werden.
Ist das Kopfteil mit - mechanisch oder elektrisch - radial verstellbaren Schneidrädern/Stützrollen ausgelegt, so können unterschiedliche Rohrdurchmesser mit einem Kopfteil bearbeitet werden. Beispielsweise sind über eine mechanische Einrichtung am Werkzeug-Kopfteil Schneidrad/Stützrollen in radialer Richtung innerhalb eines bestimmten Bereichs verstellbar, so dass entsprechende Rohrdurchmesser - wie 35 mm bis 54 mm - bearbeitbar sind. Die Verstellung kann z.B. erfolgen, indem Schieber mit Zacken im Schneidradkopf und/oder den jeweiligen Aufnahmen der Stützrollen vorgesehen sind, wobei ein Lagerungselement, wie ein Stift oder Bolzen von Schneidrad und/oder Stützrollen bzw. für mehrere Schneidräder, etc. in der Höhe - d.h. radial auf das Rohr zu bzw. vom Rohr weg - verstellt werden kann. So kann das Lagerungselement zu bearbeitenden Rohrdurchmessern entsprechend positioniert werden, indem es verschoben wird und im "Zackenschieber" einrastet. Natürlich lässt sich diese Ausführungsform ebenso mit anderen bekannten Verstell-Techniken verwirklichen.
Ist der komplette Werkzeugkopf (in bekannter Art und Weise) austauschbar, so können Kopfteile für unterschiedliche Rohrgrössen, insbesondere für 35 - 108 mm Rohre, hergestellt und an jeweilige Werkzeugkörper an-, auf- oder eingesetzt werden.

Ausserdem sind die Kopfteile mit federgelagerten Schneidrädern und gegebenenfalls Stützrollen zum Einsatz für unterschiedliche Rohrmaterialien ausbildbar, wie für Edelstahl-, Stahl-, Kupfer-, Kunststoff- oder Verbundrohre. Insbesondere sind für die unterschiedlichen Rohrtypen unterschiedliche Schneidräder einsetzbar, auch die Beschichtung der Schneidräder und Stützrollen ist entsprechend wählbar.

Die erfindungsgemässe Federlagerung von Schneidradkopf/köpfen und Stützrollen-Aufnahme/n - und damit die stabile und rechtwinklige Lagerung eines Rohres im Werkzeugkopf, sowie der definierte und gratfreie Schneidevorgang - und die Drehung des Innenkopfteils ist natürlich auch auf nicht geschlossene Schneidwerkzeug-Kopfteile, z.B. einen halboffenen Werkzeugkopf anwendbar.

Der erfindungsgemässe Rohrschneider wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: einen erfindungsgemässen Werkzeugkopf mit Antrieb im Schnitt und
- Fig. 2: einen handgehaltenen Rohrschneider in erfindungsgemässer Ausbildung in Seitenansicht.

Die Figuren werden im Folgenden zusammenhängend beschrieben.

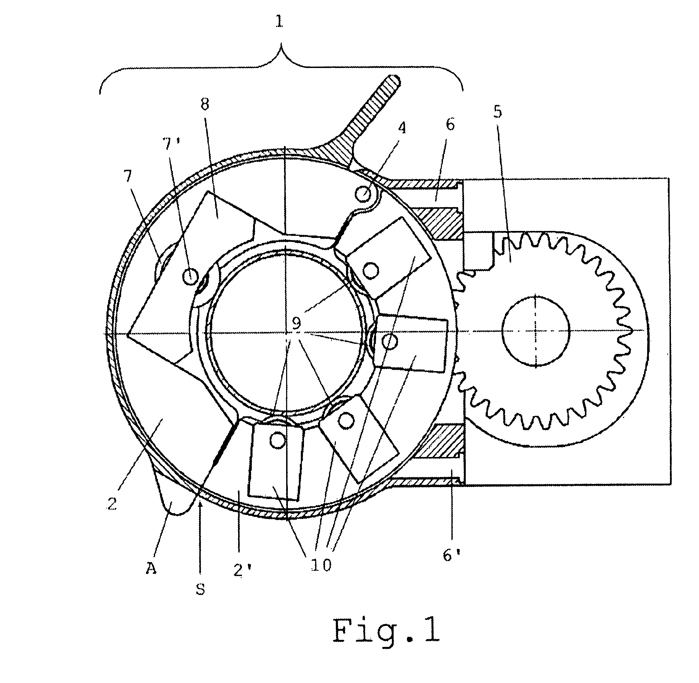

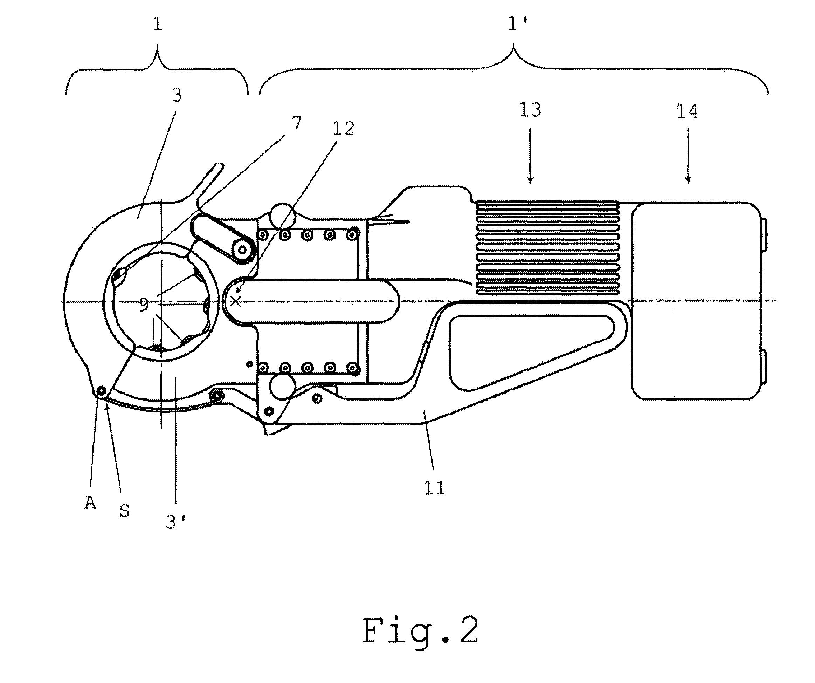

In Figur 1 dargestellt ist ein Schnitt durch eine Ausführungsform eines erfindungsgemässen Werkzeugkopfes 1. Eine erste und zweite Innenbacke 2,2', die über ein Drehgelenk 4 miteinander verbunden sind, bilden hier die Basisbestandteile des Innenkopfteils. Für grössere Rohrdurchmesser können mehrere Innenbacken vorgesehen sein. Das Aussenkopfteil, welches ebenfalls eine erste und zweite - drehgelenkig miteinander verbundene - Gehäusebacke 3,3' aufweist, ist nur ansatzweise erkennbar. Das Innenkopfteil ist im Aussenkopfteil in einer Führung drehbar gelagert und über eine Antriebseinrichtung in Drehrichtung im oder gegen den Uhrzeigersinn antreibbar.
Die Antriebseinrichtung ist nur teilweise aus der Zeichnung ersichtlich, sie umfasst in diesem Ausführungsbeispiel einen ersten und zweiten Antriebsring als erste Antriebseinheit und ein erstes und zweites Antriebsrad und einen Motor als zweite Antriebseinheit. Die Antriebsringe sind nicht gezeigt, sie sind dem Innenkopfteil zugeordnet, z.B. am äusseren Umfang beidseitig um die Innenbacken angeordnet. In der Figur dargestellt ist das zweite Antriebsrad, hier ein Zahnrad 5. Das Zahnrad 5 ist nicht mehr Bestandteil des Werkzeugkopfes 1, sondern einem - in Fig. 2 als Ganzen gezeigten - Werkzeugkörper 1' zugeordnet. Der Werkzeugkopf 1 ist über Verbindungsteile 6,6' mit dem Werkzeugkörper 1' verbindbar (und von demselben wieder lösbar), z.B. an diesen "ansteckbar". Im Werkzeugkörper 1' ist weiters ein Elektromotor 13 untergebracht, mittels welchem die Zahnräder angetrieben werden. Läuft der Motor vorwärts und rückwärts, so kann in ratschenartiger Funktionsweise ein drehbarer Innenkopf zum Schneiden eines Rohres auch in einem nicht geschlossenen Aussenkopf eingesetzt sein. Über das Zahnradgetriebe wird der Innenkopf in Drehbewegung versetzt. Die Vorrichtung Zahnradgetriebe mit Antrieb im Werkzeugkörper ist im Stand der Technik hinlänglich bekannt und bedarf daher keiner genaueren Beschreibung. Auch vom Werkzeugkörper abnehmbare und auf denselben aufsetzbare Werkzeugköpfe sind bekannt und handelsüblich. Dies ermöglicht, erfindungsgemäss ausgebildete Rohrschneider-Kopfteile mit einer Vielzahl handelsüblicher Werkzeug-Körper, die im Allgemeinen als separate, eigene Einheiten erhältlich sind, zu verbinden.

Die Einrichtung zum Antrieb des Innenkopfes ist in dieser Ausführungsform als Zahnradgetriebe ausgeführt, es versteht sich jedoch, dass andere geeignete Getriebe, wie ein Schnecken- oder Reibradgetriebe, genauso einsetzbar sind.

Zum Öffnen des Kopfes ist ein Aufnahme-/Verschlusshebel 11 vorgesehen. In der dargestellten Ausführungsform weist die erste Gehäusebacke 3' eine Art Ausbuchtung A zum Anbringen eines solchen Hebels auf. Der Aufnahme-/Verschlusshebel 11 ist in Figur 2 gezeigt.

Die erste und zweite Innenbacke 2,2' bilden eine - im Wesentlichen kreisförmige - Halterung für ein zu bearbeitendes Rohr. Zur Aufnahme des Rohres werden Aussen- und Innenkopfteil durch Ausschwenken jeweils einer Aussen- und Innenbacke geöffnet, dies erfolgt korreliert, indem die Aussen- und Innenbacken an ihrer jeweiligen Schliessstelle übereinander liegen. Das Rohr wird in die Halterung eingelegt und die Backen geschlossen. In dieser Arbeitsstellung kann nun der Schneideprozess in Gang gesetzt werden. So wird - im Allgemeinen über einen Betätigungsknopf - der Motor eingeschaltet, und damit das Innenkopfteil in Drehbewegung um das eingespannte Rohr herum versetzt.

Zum Schneiden des Rohres ist ein Schneidrad 7 vorgesehen, welches in einem in das Innenkopfteil - hier in die erste Innenbacke 2 - integrierten Schneidradkopf 8 um die Schneidradachse 7' drehbar angeordnet ist. Ausserdem ist der Schneidradkopf 8 mit dem Schneidrad 7 federgelagert - die Federlagerung ermöglicht die Einstellung einer definierten Zustellkraft beim Schneiden. So ist über die Federn eine vorgegebene Vorspannkraft einstellbar. Die bei Arbeitsbeginn über die Federspannung eingestellte (maximale) Zustellkraft nimmt im Laufe der Schneidearbeit mit zunehmender Schnitttiefe - durch die Entlastung der Feder - automatisch ab.

Damit werden Innengrate durch einen Einzug nach Innen des Rohres beim Schneidevorgang vermieden und ein sauberer Schnitt erreicht.

Durch das rechtwinklig eingespannte Rohr werden weiters schiefe Schnitte und schräge Schnittkanten vermieden. Die rechtwinklige Ausrichtung des eingespannten Rohres erfolgt durch entsprechende Lagerung des Rohres im Innenkopfteil. Die rechtwinklige Lagerung wird dabei entweder durch mehrere um den Umfang des Innenkopfteils angeordnete Schneidräder in federgelagerten Schneidradköpfen erreicht - mit einer derartigen Ausführungsform ist zum Schneiden eines Rohres keine volle Drehung des Innenkopfes um das Rohr notwendig -, oder durch zusätzliche Stützrollen im Innenkopfteil. In der gezeigten Ausführungsform sind ein federgelagerter Schneidradkopf 8 mit Schneidrad 7 und vier Stützrollen 9 in das Innenkopfteil integriert. Das Schneidrad 7 ist hier in die erste Innenbacke 2 eingesetzt, die vier Stützrollen 9 in die zweite Innenbacke 2'. Für die rechtwinklige Ausrichtung eines eingespannten Rohres ist die Anordnung so gewählt, dass auf dasselbe um den Umfang verteilt eine gleichmässige Krafteinwirkung stattfindet. Damit richtet sich ein Rohr, welches in die Halterung aufgenommen wird, sogar sozusagen automatisch rechtwinklig (zum Schneidrad 7) aus. Die Ausbildung mit einem Schneidrad 7 und vier Stützrollen 9 ist rein beispielhaft, ebenso können zwei Schneidräder und drei Stützrollen, etc. vorgesehen werden. Die Stützrollen 9 sind in diesem Ausführungsbeispiel als Kugellager ausgebildet und ebenfalls in entsprechenden federgelagerten Aufnahmen 10 angeordnet.

Figur 2 zeigt einen Rohrschneider als Handwerkzeug mit Werkzeugkörper 1' und der Ausführungsform des Werkzeugkopfes 1 aus Figur 1. Das Kopfteil ist an den Werkzeugkörper 1' angesteckt. In dieser Seitenansicht des Werkzeugs ist nun das Aussenkopfteil mit erster und zweiter Gehäusebacke 3,3' erkennbar. Auch dargestellt ist hier der bereits erwähnte Aufnahme- und Verschlusshebel 11. Bei Betätigung des Hebels wird das Aussenkopfteil an dessen Schliessstelle S geöffnet oder geschlossen. In der Korrelationsposition, in welcher die Schliessstellen von Aussen- und Innenkopfteil übereinander liegen, kann mittels des Hebels die erste Gehäusebacke 3 des Aussenkopfteils ausgeschwenkt und dann die erste Innenbacke 2 des Innenkopfteils ebenfalls ausgeschwenkt werden. Das Werkzeug kann aber selbstverständlich auch mit einem von dieser Ausführungsform unterschiedlichen Öffen- und Schliessmechanismus ausgebildet sein.
Der Werkzeugkörper 1' umfasst weiters einen Teil der Antriebseinrichtung, hier z.B. zwei Antriebsräder, einen Elektromotor 13 und einen Akku 14. Elektromotor 13 und Akku 14 sind (vom Kopf aus gesehen) im hinteren Teil des Werkzeugkörpers 1' angeordnet. Die Antriebsräder sind so angeordnet, dass sie bei Verbindung von Kopf und Körper ins Kopfteil eingreifen (siehe Fig. 1 mit dem Zahnrad 5 als zweitem Antriebsrad). Die Ausbildung und Anordnung der Räder ist insbesondere derart, dass Kopfteile für unterschiedliche Rohrgrössen und -materialien an den Körper angesteckt werden können und mittels der Antriebsräder in Drehbewegung versetzbar sind.
Dem Werkzeug sind ein oder mehrere Sensoren zuordenbar. In Fig. 2 ist ein Sensor zum Anzeigen der Korrelationsposition der Innen- und Gehäusebacken vorgesehen. Der Korrelationspositions-Sensor 12 ist an der mit x bezeichneten Stelle angeordnet. Mit einem Hall-Sensor als Korrelationspositions-Sensor 12 sind Magnete in den Backen - hier jeweils in der zweiten Innen- und Gehäusebacke 2',3' - detektierbar, welche Magnete so angeordnet sind, dass bei Detektion die Backen in der Korrelationsposition zum Öffnen stehen.
Das Werkzeug kann weitere Sensoren, z.B. zum Indizieren der Hebelposition (offen - zu) oder eines geschlossenen Zustands der Backen, aufweisen. Die Messwerte der jeweiligen Sensoren sind vorteilhaft mittels optischer oder akustischer Signale dem Benutzer übermittelbar.
Weiter vorteilhaft ist das Werkzeug mit einer - mechanischen oder elektrischen - Einrichtung versehen, die bei Fehlfunktion des Werkzeugs ermöglicht, die Innen- mit den Gehäusebacken zum Öffnen in die Korrelationsposition zu bringen. Eine solche Einrichtung ist beispielsweise als Bauteil zum manuellen Drehen der Innenbacken ausführbar, oder als Komponente zum Ansetzen eines Dreh-Werkzeugs.

## Patentansprüche

1. Rohrschneider zum Schneiden eines Rohres mit:
o einem Kopfteil mit
- einem Aussenkopfteil mit wenigstens einer ersten Gehäusebacke (3),
- einem Innenkopfteil mit wenigstens einer ersten und zweiten Innenbacke (2,2'),
wobei
- das Aussenkopfteil als Aufnahme für das Innenkopfteil ausgebildet ist,
- die Innenbacken (2,2') in Umfangrichtung aneinander anschliessen und in geschlossenem Zustand eine im Wesentlichen kreisförmige Rohrhalterung bilden,
- die Innenbacken (2,2') derart verbunden sind, dass eine Schwenkbewegung der Backen relativ zueinander ausführbar ist,
- zur Auf- und Entnahme des Rohres der geschlossene Zustand durch Ausschwenken wenigstens einer Innenbacke (2,2') geöffnet werden kann,
- der geschlossene Zustand durch Einschwenken der wenigstens einen Innenbacke (2,2') wiederhergestellt werden kann,
- das Innenkopfteil wenigstens einen Schneidradkopf (8), in welchem ein Schneidrad (7) beweglich gelagert ist, aufweist,
und mit
o einer Antriebseinrichtung, mittels welcher das Innenkopfteil in eine Drehbewegung versetzt werden kann,
wobei
o der wenigstens eine Schneidradkopf (8) im Innenkopfteil federgelagert ist, wobei über die Federn eine vorgegebene Vorspannkraft einstellbar ist.

2. Rohrschneider nach Anspruch 1, **dadurch gekennzeichnet, dass** die Antriebseinrichtung eine erste und zweite Antriebseinheit umfasst, wobei
o die erste Antriebseinheit dem Innenkopfteil und
o die zweite Antriebseinheit einem Werkzeugkörper (1'), welcher Werkzeugkörper (1') mit dem Kopfteil lösbar verbunden ist,
zugeordnet ist.

3. Rohrschneider nach Anspruch 2, **dadurch gekennzeichnet, dass** der Antriebseinrichtung
o als erste Antriebseinheit wenigstens ein dem Innenkopfteil zugeordneter Antriebsring,
o als zweite Antriebseinheit
- wenigstens ein Antriebsrad, z.B. ein Zahnrad (5), zum Antrieb des wenigstens einen Antriebsringes und
- ein Antriebsmittel, wie ein Elektromotor (13), zum Antrieb des wenigstens einen Antriebsrades
zugeordnet sind.

4. Rohrschneider nach einem der vorangehenden Ansprüche, **dadurch gekennzeichnet, dass** die Antriebseinrichtung als Zahnradgetriebe oder Reibradgetriebe ausgeführt ist.

5. Rohrschneider nach einem der Ansprüche 2 bis 4, **dadurch gekennzeichnet, dass** Kopfteile für unterschiedliche Rohrgrössen, z.B. für Rohrdurchmesser zwischen 35 mm und 108 mm, modulartig mit dem Werkzeugkörper (1') lösbar verbindbar ist.

6. Rohrschneider nach einem der vorangehenden Ansprüche, **dadurch gekennzeichnet, dass** das Innenkopfteil, vorzugsweise federkraftbeaufschlagte, Stützrollen (9) für das Rohr aufweist.

7. Rohrschneider nach Anspruch 6, **dadurch gekennzeichnet, dass** die Stützrollen (9) als Lager, insbesondere Kugellager, ausgebildet sind.

8. Rohrschneider nach Anspruch 6 oder 7, **dadurch gekennzeichnet, dass** das die Stützrollen (9) als parallele Rollenpaare und/oder mit maximaler Rollenbreite ausgebildet sind.

9. Rohrsschneider nach Anspruch 6, 7 oder 8, **dadurch gekennzeichnet, dass** das Innenkopfteil Aufnahmen (10) für die Stützrollen (9) aufweist, welche Aufnahmen (10) im Innenkopfteil federgelagert sind, und wobei die Stützrollen (9) in den Aufnahmen (10) beweglich gelagert sind.

10. Rohrschneider nach einem der vorangehenden Ansprüche,
**dadurch gekennzeichnet, dass**
- das wenigstens eine Schneidrad (7) und/oder
- die Stützrollen (9)
eine reibungsvermindernde Beschichtung aufweisen.

11. Rohrschneider nach einem der vorangehenden Ansprüche,
**dadurch gekennzeichnet, dass**
- der wenigstens eine Schneidradkopf (8) und/oder
- die Aufnahmen (10)
so ausgebildet sind, dass die Position
- des wenigstens einen Schneidrads (7) und/oder
- der Stützrollen (9)
im Kopfteil radial verstellbar ist.

12. Rohrschneider nach einem der vorangehenden Ansprüche, **dadurch gekennzeichnet, dass** das Aussenkopfteil eine zweite Gehäusebacke (3') aufweist, welche zweite Gehäusebacke (3') mit der ersten Gehäusebacke (3) öffen- und schliessbar verbunden ist.

13. Rohrschneider nach Anspruch 12, **dadurch gekennzeichnet, dass** die Innen- und Gehäusebacken (2,2',3,3') in einer Korrelationsposition zur Auf- und Entnahme des Rohres öffen- und schliessbar sind.

14. Rohrschneider nach Anspruch 13, **dadurch gekennzeichnet, dass** eine mechanische und/oder elektrische Einrichtung zum Herstellen der Korrelationsposition zwischen Innenbacken (2,2') und Gehäusebacken (3,3') vorgesehen ist.

15. Rohrschneider nach Anspruch 13 oder 14, **dadurch gekennzeichnet, dass** der Rohrschneider
- eine mechanische Einrichtung zum Erkennen der Korrelationsposition und/oder
- wenigstens einen Sensor als Korrelationspositions-Detektor (12), insbesondere einen Hall-Sensor, zur Detektion der Korrelationsposition aufweist, welcher Sensor bei Detektion der Korrelationsposition gegebenenfalls ein akustisches und/oder optisches Signal auslöst.

16. Kopfteil für einen Rohrschneider nach einem der vorangehenden Ansprüche, mit
- einem Aussenkopfteil mit wenigstens einer ersten Gehäusebacke (3),
- einem Innenkopfteil mit wenigstens einer ersten und zweiten Innenbacke (2,2'),
wobei
- das Aussenkopfteil als Aufnahme für das Innenkopfteil ausgebildet ist,
- die Innenbacken (2,2') in Umfangrichtung aneinander anschliessen und in geschlossenem Zustand eine im Wesentlichen kreisförmige Rohrhalterung bilden,
- die Innenbacken (2,2') derart verbunden sind, dass eine Schwenkbewegung der Backen relativ zueinander ausführbar ist,
- zur Auf- und Entnahme des Rohres der geschlossene Zustand durch Ausschwenken wenigstens einer Innenbacke (2,2') geöffnet werden kann,
- der geschlossene Zustand durch Einschwenken der wenigstens einen Innenbacke (2,2') wiederhergestellt werden kann,
- das Innenkopfteil wenigstens einen Schneidradkopf (8), in welchem ein Schneidrad (7) beweglich gelagert ist, aufweist,
wobei
der wenigstens eine Schneidradkopf (8) im Innenkopfteil federgelagert ist, wobei über die Federn eine vorgegebene Vorspannkraft einstellbar ist.

## Claims

1. Pipe cutter for cutting a pipe, comprising:
o a head part having
- an outer head part with at least one first housing jaw (3),
- an inner head part with at least one first and second inner jaw (2, 2'),
- the outer head part being in the form of a receptacle for the inner head part,
- the inner jaws (2, 2') being adjacent to one another in the circumferential direction and forming a substantially circular pipe holder in the closed state,
- the inner jaws (2, 2') being connected in such a way that it is possible to execute a pivot movement of the jaws relative to one another,
- it being possible to open the closed state by swivelling out at least one inner jaw (2, 2') for receiving and removing the pipe,
- it being possible to restore the closed state by swivelling in the at least one inner jaw (2, 2'),
- the inner head part having at least one cutting wheel head (8) in which a cutting wheel (7) is displaceably mounted,
and comprising
o a drive device by means of which the inner head part can be caused to execute a rotational movement,
wherein
o the at least one cutting wheel head (8) is spring-mounted in the inner head part, a predetermined pretensioning force being settable by means of the springs.

2. Pipe cutter according to Claim 1, **characterized in that** the drive device comprises a first and second drive unit,
o the first drive unit being coordinated with the inner head part and
o the second drive unit being coordinated with a tool body (1'), which tool body (1') is detachably connected to the head part.

3. Pipe cutter according to Claim 2, **characterized in that**
o as a first drive unit, at least one drive ring coordinated with the inner head part,
o as a second drive unit
- at least one drive wheel, e.g. a toothed wheel (5), for driving the at least one drive ring and
- a drive means, such as an electric motor (13), for driving the at least one drive wheel
are coordinated with the drive device.

4. Pipe cutter according to any of the preceding Claims, **characterized in that** the drive device is designed as a toothed gear or friction gear.

5. Pipe cutter according to any of Claims 2 to 4, **characterized in that** head parts for different pipe sizes, for example for pipe diameters between 35 mm and 108 mm, are detachably connected in a modular manner to the tool body (1').

6. Pipe cutter according to any of the preceding Claims, **characterized in that** the inner head part has support rollers (9), preferably support rollers (9) subjected to spring force, for the pipe.

7. Pipe cutter according to Claim 6, **characterized in that** the support rollers (9) are in the form of bearings, in particular ball bearings.

8. Pipe cutter according to Claim 6 or 7, **characterized in that** the support rollers (9) are in the form of parallel pairs of rollers and/or are formed with maximum roller width.

9. Pipe cutter according to Claim 6, 7 or 8, **characterized in that** the inner head part has receptacles (10) for the support rollers (9), which receptacle (10) are spring-mounted in the inner head part, the support rollers (9) being movably mounted in the receptacles (10).

10. Pipe cutter according to any of the preceding Claims, **characterized in that**
- the at least one cutting wheel (7) and/or
- the support rollers (9)
have a friction-reducing coating.

11. Pipe cutter according to any of the preceding Claims, **characterized in that**
- the at least one cutting wheel head (8) and/or
- the receptacles (10)
are formed so that the position
- of the at least one cutting wheel (7) and/or
- of the support rollers (9)
is radially adjustable in the head part.

12. Pipe cutter according to any of the preceding Claims, **characterized in that** the outer head part has a second housing jaw (3'), which second housing jaw (3') is connected to the first housing jaw (3) so as to permit opening and closing.

13. Pipe cutter according to Claim 12, **characterized in that** the inner and housing jaws (2, 2' , 3, 3') can be opened and closed in a correlation position for receiving and removing the pipe.

14. Pipe cutter according to Claim 13, **characterized in that** a mechanical and/or electrical device for producing the correlation position between inner jaws (2, 2') and housing jaws (3, 3') is provided.

15. Pipe cutter according to Claim 13 or 14, **characterized in that** the pipe cutter has
- a mechanical device for recognizing the correlation position and/or
- at least one sensor as correlation position detector (12), in particular a Hall sensor, for detecting the correlation position, which sensor optionally triggers an acoustic and/or optical signal on detection of the correlation position.

16. Head part for a pipe cutter according to any of the preceding Claims, comprising
- an outer head part with at least one first housing jaw (3),
- an inner head part with at least one first and second inner jaw (2, 2'),
- the outer head part being in the form of a receptacle for the inner head part,
- the inner jaws (2, 2') being adjacent to one another in the circumferential direction and forming a substantially circular pipe holder in the closed state,
- the inner jaws (2, 2') being connected in such a way that it is possible to execute a pivot movement of the jaws relative to one another,
- it being possible to open the closed state by swivelling out at least one inner jaw (2, 2') for receiving and removing the pipe,
- it being possible to restore the closed state by swivelling in the at least one inner jaw (2, 2'),
- the inner head part having at least one cutting wheel head (8) in which a cutting wheel (7) is displaceably mounted,
wherein
the at least one cutting wheel head (8) is spring-mounted in the inner head part, a predetermined pretensioning force being settable by means of the springs.

## Revendications

1. Dispositif de coupe de tubes pour couper un tube, comprenant :
O une partie tête, avec
- une partie tête extérieure, comprenant au moins une première mâchoire de boîtier (3),
- une partie tête intérieure comprenant au moins une première et une deuxième, mâchoires intérieures (2, 2'),
où
- la partie tête extérieure est réalisée sous forme de logement pour la partie tête intérieure,
- les mâchoires intérieures (2, 2') se raccordent l'une à l'autre en direction périphérique et, à l'état fermé, forment une fixation tubulaire à forme sensiblement circulaire,
- les mâchoires intérieures (2, 2') sont reliées de manière qu'un mouvement de pivotement des mâchoires l'une par rapport à l'autre puisse être effectué,
- pour recevoir et prélever le tube, l'état fermé peut être ouvert, par pivotement au moins d'une mâchoire intérieure (2, 2'),
- l'état fermé peut être rétabli par rétraction par pivotement de la au moins une mâchoire intérieure (2, 2'),
- la partie tête intérieure présente au moins une tête de roue découpeuse (8), dans laquelle est montée de façon mobile une roue découpeuse (7),
et avec
O un dispositif d'entraînement, au moyen duquel la partie tête intérieure peut être mise en un mouvement rotatif,
O la au moins une tête de roue découpeuse (8) est reposée par ressorts dans la partie tête intérieure, sachant qu'une force de précontrainte prédéterminée est réglable par l'intermédiaire des ressorts.

2. Dispositif de coupe de tubes selon la revendication 1, **caractérisé en ce que** le dispositif d'entraînement comprend une première et une deuxième unités d'entraînement, où
O la première unité d'entraînement est associée à la partie tête intérieure, et
O la deuxième unité d'entraînement est associée à un corps d'outil (1'), ledit corps d'outil (1') étant relié de façon désolidarisable à la partie tête.

3. Dispositif de coupe de tubes selon la revendication 2, **caractérisé en ce qu'**au dispositif d'entraînement sont associés,
O en tant que première unité d'entraînement, au moins une bague d'entraînement associée à la partie tête intérieure,
O en tant que deuxième unité d'entraînement,
- au moins une roue d'entraînement, par exemple une roue dentée (5), pour assurer l'entraînement de la au moins une bague d'entraînement, et
- un moyen d'entraînement, tel qu'un moteur électrique (13), pour l'entraînement de la au moins une roue d'entraînement.

4. Dispositif de coupe de tubes selon l'une des revendications précédentes, **caractérisé en ce que** le dispositif d'entraînement est réalisé sous forme de transmission à roues dentées, ou de transmission à roues à friction.

5. Dispositif de coupe de tubes selon l'une des revendications 2 à 4, **caractérisé en ce que** des parties têtes peuvent être reliées de façon désolidarisable, de façon modulaire, au corps d'outil (1') pour des grosseurs de tubes différentes, par exemple pour des diamètres de tubes compris dans la fourchette entre 35 mm et 108 mm.

6. Dispositif de coupe de tubes selon l'une des revendications précédentes, **caractérisé en ce que** la partie tête intérieure présente, de préférence, des galets d'appui (9), sollicités par une tension du ressort, pour le tube.

7. Dispositif de coupe de tubes selon la revendication 6, **caractérisé en ce que** les galets d'appui (9) sont réalisés sous forme de paliers, en particulier de roulements à billes.

8. Dispositif de coupe de tubes selon la revendication 6 ou 7, **caractérisé en ce que** les galets d'appui (9) sont réalisés sous forme de paires de rouleaux parallèles et/ou avec une largeur de rouleau maximale.

9. Dispositif de coupe de tubes selon la revendication 6, 7 ou 8, **caractérisé en ce que** la partie tête intérieure présente des logements (10) pour les galets d'appui (9), lesdits logements (10) étant montés élastiquement dans la partie tête intérieure, et les galets d'appui (9) étant montés de façon mobile dans les logements (10).

10. Dispositif de coupe de tubes selon l'une des revendications précédentes, **caractérisé en ce que**
- la au moins une roue de découpage (7) et/ou
- les galets d'appui (9)
présentent un revêtement diminuant le frottement.

11. Dispositif de coupe de tubes selon l'une des revendications précédentes, **caractérisé en ce qu'**
- au moins une tête de roue découpeuse (8) et/ou
- les logements (10)
sont réalisés de manière que la position
- de la au moins une roue découpeuse (7) et/ou
- des galets d'appui (9)
puisse être réglable radialement dans la partie tête.

12. Dispositif de coupe de tubes selon l'une des revendications précédentes, **caractérisé en ce que** la partie tête extérieure présente une deuxième mâchoire de boîtier (3'), ladite deuxième mâchoire de boîtier (3') étant reliée, de façon à pouvoir être ouverte et fermée, à la première mâchoire de boîtier (3).

13. Dispositif de coupe de tubes selon la revendication 12, **caractérisé en ce que** les mâchoires intérieures et mâchoires de boîtier (2, 2', 3, 3') sont susceptibles d'être ouvertes et fermées, en une position en corrélation pour la réception et le prélèvement du tube.

14. Dispositif de coupe de tubes selon la revendication 13, **caractérisé en ce qu'**un dispositif mécanique et/ou électrique est prévu pour établir la position en corrélation entre les mâchoires intérieures (2, 2') et les mâchoires de boîtier (3, 3').

15. Dispositif de coupe de tubes selon la revendication 13 ou 14, **caractérisé en ce que** le dispositif de coupe de tubes présente
- un dispositif mécanique, pour identifier la position en corrélation et/ou
- au moins un capteur, réalisé en tant que détecteur de position en corrélation (12), en particulier, un capteur à effet Hall, pour la détection de la position en corrélation, ledit capteurn à la détection de la position en corrélationn déclenchant le cas échéant un signal acoustique et/ou optique.

16. Partie tête pour un dispositif de coupe de tubes selon l'une des revendications précédentes, comprenant:
- une partie tête extérieure, comprenant au moins une première mâchoire de boîtier (3),
- une partie tête intérieure, comprenant au moins une première et une deuxième mâchoires intérieures (2, 2'),
où
- la partie tête extérieure est réalisée sous forme de logement pour la partie tête intérieure,
- les mâchoires intérieures (2, 2') se raccordent les unes les autres en direction périphérique et, à l'état fermé, forment une fixation pour tubes sensiblement à forme circulaire,
- les mâchoires intérieures (2, 2') sont reliées de manière qu'un mouvement de pivotement des mâchoires, les unes par rapport aux autres puisse être effectué,
- pour la réception et le prélèvement du tube, l'état fermé peut être ouvert par pivotement d'au moins une mâchoire intérieure (2, 2'),
- l'état fermé peut être rétabli, par pivotement de rétraction de la au moins une mâchoire intérieure (2, 2'),
- la partie tête intérieure présente au moins une tête de roue découpeuse (8), dans laquelle est montée de façon mobile une roue découpeuse (7),
où
la au moins une tête de roue découpeuse (8) est reposée par ressorts dans la partie tête intérieure, une force de précontrainte prédéterminée étant réglable par l'intermédiaire des ressorts.
